# EUROPÄISCHE PATENTSCHRIFT

(11) **EP 3 410 158 B1**
(45) Veröffentlichungstag und Bekanntmachung des Hinweises auf die Patenterteilung: **02.12.2026**
(21) Anmeldenummer: 18158934.2
(22) Anmeldetag: 27.02.2018
(51) Int. Cl.: G01S 19/40, G01C 21/28, G01C 21/30, G01S 19/45, G01S 19/48, G01S 19/51, G01S 13/00

(54) **VERFAHREN, VORRICHTUNGEN UND COMPUTERLESBARES SPEICHERMEDIUM MIT INSTRUKTIONEN ZUR ORTSBESTIMMUNG EINES DURCH EIN KRAFTFAHRZEUG ERFASSTEN DATUMS**
METHOD, DEVICES AND COMPUTER-READABLE STORAGE MEDIA COMPRISING INSTRUCTIONS FOR DETERMINING THE POSITION OF DATA CAPTURED BY A MOTOR VEHICLE
PROCÉDÉS, DISPOSITIFS ET SUPPORT DE STOCKAGE LISIBLE PAR ORDINATEUR POURVUS D'INSTRUCTIONS DE LOCALISATION D'UNE DATE DÉTECTÉE AU MOYEN D'UN VÉHICULE

(30) Priorität: 04.05.2017 DE 102017207544
(43) Veröffentlichungstag der Anmeldung: 05.12.2018
(73) Patentinhaber: VOLKSWAGEN AKTIENGESELLSCHAFT, 38440 Wolfsburg (DE)
(72) Erfinder: Max, Stephan, 38518 Gifhorn (DE)

(56) Entgegenhaltungen:
- DE-A1- 102015 210 015
- DE-A1- 102015 214 575
- DE-A1- 102015 215 699
- DE-A1- 102016 208 846
- DE-U1- 202016 001 002
- US-A1- 2010 241 354
- US-A1- 2017 010 121
- US-A1- 2017 016 740

## Beschreibung

Die vorliegende Erfindung betrifft Verfahren, Vorrichtungen und ein computerlesbares Speichermedium mit Instruktionen zur Bestimmung einer Messposition für ein durch eine Umgebungssensorik eines Kraftfahrzeugs erfasstes Datum. Die Erfindung betrifft weiterhin ein Kraftfahrzeug, in dem ein erfindungsgemäßes Verfahren oder eine erfindungsgemäße Vorrichtung eingesetzt wird.

In modernen Fahrzeugen werden unterschiedlichste Daten gesammelt. Diese können an einen Server übermittelt und für weitere Zwecke außerhalb des Fahrzeugs genutzt werden. Die Daten hierzu resultieren aus Messungen, welche durch Umfeldsensoren des Fahrzeugs durchgeführt werden. Beispiele für solche Umfeldsensoren sind Kameras, Radarsensoren, Ultraschallsensoren, etc.

Zusätzlich zu den eigentlichen Messdaten werden oftmals der Zeitpunkt der Messung und die Position der Messung übertragen. Diese zusätzlichen Daten werden in der Regel mit Hilfe eines GPS-Empfängers (GPS: Global Positioning System; Globales Positionsbestimmungssystem) ermittelt.

Vor diesem Hintergrund beschreibt die DE 10 2013 210 395 A1 ein Verfahren zur Datenkommunikation zwischen einer Vielzahl von Kraftfahrzeugen und einem fahrzeugexternen zentralen Informationspool. Die Kraftfahrzeuge weisen jeweils einen automatischen Fahrmodus auf. Von der Vielzahl der Kraftfahrzeuge werden an den zentralen Informationspool Daten übertragen, welche Informationen über das Einschalten des automatischen Fahrmodus sowie einen Einschaltort des Fahrmodus und/oder Informationen über das Ausschalten des automatischen Fahrmodus sowie einen Ausschaltort des Fahrmodus bei dem jeweiligen Kraftfahrzeug beinhalten. Anhand der empfangenen Daten kann der Informationspool Rückschlüsse darauf ziehen, an welchen Orten das Einschalten und/oder das Ausschalten des automatischen Fahrmodus möglich und vor allem auch sinnvoll ist.

Für eine Reihe von Anwendung ist die Ungenauigkeit der Positionsmessungen mittels der GPS-Empfänger problematisch. Je nach Situation können die Abweichungen von der tatsächlichen Position mehr als 10m betragen. Die Messdaten können daher nicht mehr einzelnen Fahrspuren zugeordnet werden. Besonders bei mehrspurigen Straßen ist es besonders wichtig zu erfassen, welche Fahrspur gesperrt oder gestaut ist, um nur zwei Beispiele zu nennen.

Für eine genauere Positionsbestimmung wurden diverse Ansätze entwickelt. Die meisten Ansätze basieren auf einer Kombination von Informationen, die durch eine Umfeldsensorik ermittelt werden, mit einer im Fahrzeug vorhandenen hochgenauen Karte. Diese Karte beinhaltet beispielsweise ein bereits im Vorfeld ermitteltes Spurmodel und kann so die aktuelle Messung in Kombination mit einer GPS-Messung einer spurgenauen Position zuordnen.

In diesem Zusammenhang beschreibt die Arbeit von D. Niehues: *"Hochgenaue Positionsbestimmung von Fahrzeugen als Grundlage autonomer Fahrregime im Hochgeschwindigkeitsbereich"* ein Verfahren zur Positionsbestimmung von Fahrzeugen. Unter anderem wird die Kombination einer videobasierten Spurerkennung in Verbindung mit einer hochgenauen digitalen Karte für eine zusätzliche Stützung der Fahrzeugposition beschrieben. Mit einer Videokamera werden für jeweils eine Fahrstreifenmarkierung links und rechts neben dem Fahrzeug der Spurabstand, die Ausrichtung und die Krümmung ermittelt. Auf Grundlage dieser Daten wird durch einen Vergleich mit Daten aus einer digitalen Karte eine Querablage des Fahrzeugs bestimmt.

Aus der DE 10 2015 206 342 A1 ist ein Verfahren zur Korrektur einer Position eines Fahrzeugs bekannt. Mit Hilfe eines Satellitennavigationssystems wird eine erste Position des Fahrzeugs bestimmt und in eine digitale Karte eingepasst. Mittels einer Umfeldsensorik werden zudem Objekte in der Umgebung des Fahrzeugs detektiert, deren Positionen in der digitalen Karte referenzierbar sind. Anhand der realen Abstände des Fahrzeugs zu den detektierten Objekten wird schließlich eine korrigierte Position des Fahrzeugs bestimmt. Für die Bereitstellung der digitalen Karte ist das Fahrzeug mit einem Kartenserver verbunden.

Die US 2017/0016740 A1 beschreibt ein Verfahren zum Bestimmen einer Fahrzeugposition. Geometrische Eigenschaften eines festen geografischen Objekts in einem Bild, das von einer Fahrzeugkamera erfasst wird, werden bestimmt. Basierend auf den geometrischen Eigenschaften wird ein Fahrzeugstandort in Bezug auf das feste geografische Objekt bestimmt. Basierend auf dem so bestimmten Fahrzeugstandort in Bezug auf das feste geografische Objekt wird schließlich ein fahrspurbezogener Fahrzeugstandort auf einer digitalen Karte bestimmt. Bei dem festen geografischen Objekt kann es sich beispielsweise um Gebäude handeln. Fahrspurmarkierungen können eine Fahrzeugpositionsbestimmung unterstützen oder verwendet werden, um eine projizierte fahrspurbezogene Position zu bestätigen.

DE 10 2015 215 699 A1 beschreibt ein Verfahren zum Lokalisieren eines automatisierten Kraftfahrzeugs. Bei dem Verfahren wird eine zu erzielende Lokalisierungsgenauigkeit für das automatisierte Kraftfahrzeug während des Betriebs vorgegeben, wobei vom Kraftfahrzeug Lokalisierungsreferenzdaten für einen definierten Ort mit der definierten zu erzielenden Lokalisierungsgenauigkeit angefordert und an das automatisierte Kraftfahrzeug übermittelt werden. Mittels einer Sensoreinrichtung des automatisierten Kraftfahrzeugs werden Umgebungsdaten des automatisierten Kraftfahrzeugs erfasst. Diese werden mit Ortsinformation verknüpft. Mittels der Lokalisierungsreferenzdaten und der erfassten Umgebungsdaten wird das automatisierte Kraftfahrzeug lokalisiert, wobei eine erreichte Lokalisierungsgenauigkeit ermittelt wird. Diese wird zum Zwecke einer optimierten Übermittlung der Lokalisierungsreferenzdaten im Hinblick auf die zu erzielende Lokalisierungsgenauigkeit signalisiert.

DE 10 2015 210 015 A1 beschreibt ein Verfahren zur Positionsbestimmung eines Fahrzeugs. Bei dem Verfahren wird mittels einer GNS-Einheit eine GNS-Fahrzeugposition bestimmt. Zudem wird ein Umfeld der GNS-Fahrzeugposition mittels einer Radarsensorik des Fahrzeugs sensorisch erfasst, um dem erfassten Umfeld entsprechende Radardaten zu ermitteln. Basierend auf den Radardaten werden sich im Umfeld befindende Objekte detektiert. Des Weiteren wird ein Richtungsvektor ermittelt, der von einem detektierten Objekt zur Radarsensorik oder zu einem anderen fahrzeugfesten Bezugspunkt zeigt. Die Radardaten und der ermittelte Richtungsvektor werden mit einer digitalen Karte verglichen, die Objekte und den Objekten zugeordnete Richtungsvektoren aufweist, wobei die den Objekten zugeordnete Richtungsvektoren auf eine Position in der digitalen Karte zeigen, von welcher das entsprechende Objekt mittels einer Radarsensorik erfasst wurde. Basierend auf der GNS-Fahrzeugposition und dem Vergleich wird schließlich eine korrigierte Fahrzeugposition ermittelt.

US 2010/0241354 A1 beschreibt ein Verfahren zur Bewertung von Daten einer digitalen Karte für ein Fahrzeug. Bei dem Verfahren werden Daten der digitalen Karte durch eine Recheneinheit entgegengenommen. Die Bewertung der Daten wird dann auf Basis einer karteneigenen Qualitätsinformation oder auf Basis von Messdaten einer Umfeldsensorik des Fahrzeugs durchgeführt. Die Bewertung wird schließlich an ein Fahrerassistenzsystem oder ein Sicherheitssystem des Fahrzeugs übergeben, welches die Daten der digitalen Karte auf Basis der Bewertung verwendet.

DE 10 2015 214 575 A1 beschreibt ein Verfahren zum Verteilen von Verkehrsinformationen. Bei dem Verfahren wird eine Zustandsinformation in einem ersten Fahrzeug erfasst, wobei die Zustandsinformation einen physikalischen Zustand der Umgebung oder des ersten Fahrzeugs betrifft. Zudem wird eine Positionsinformation des ersten Fahrzeugs in dem ersten Fahrzeug erfasst, wobei die Positionsinformation eine Position des ersten Fahrzeugs kodiert, bei der die Zustandsinformation ermittelt wurde. Die Zustandsinformationen und die Positionsinformationen werden schließlich an einen zentralen Internetserver versendet.

Im Dokument erfolgt keine Verknüpfung von Messdaten mit Umgebungsdaten zum Zwecke einer Übermittlung an einen Server. Vielmehr werden die Messdaten unmittelbar mit Positionsdaten verknüpft.

Allen beschriebenen Lösungen gemein ist der Umstand, dass eine hochgenaue und stets aktuelle digitale Karte im Fahrzeug vorgehalten werden muss. Daraus ergeben sich deutliche Kosten in den Fahrzeugen und ein sehr hoher Aufwand für die Pflege der digitalen Karte.

Es ist eine Aufgabe der Erfindung, Lösungen zur Bestimmung einer Messposition eines durch eine Umgebungssensorik eines Kraftfahrzeugs erfassten Datums aufzuzeigen, die eine Bestimmung der Messposition mit verbesserter Genauigkeit ermöglichen, ohne dass im Kraftfahrzeug eine hochgenaue Karte vorgehalten werden muss.

Diese Aufgabe wird durch die unabhängigen Ansprüche gelöst. Bevorzugte Ausgestaltungen der Erfindung sind Gegenstand der abhängigen Ansprüche.

Gemäß einem ersten Aspekt der Erfindung umfasst ein Verfahren zur Bestimmung einer Messposition für ein Datum, das durch eine Umgebungssensorik eines Kraftfahrzeugs erfasst wird, wobei das Verfahren im Kraftfahrzeug implementiert ist, die Schritte:
- Bestimmen von Positionsdaten mittels eines Navigationssystems des Kraftfahrzeugs;
- Bestimmen von lokalen Umfelddaten mit Angaben zu visuellen Landmarken durch Auswertung von Bildern einer Kamera der Umgebungssensorik;
- Erfassen zumindest eines Datums, für das in einem Backend eine Messposition bestimmt werden soll, durch die Umgebungssensorik;
- Generieren eines Datenpakets durch Verknüpfen des Datums, der Positionsdaten und der lokalen Umfelddaten mit Angaben zu visuellen Landmarken, wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge; und
- selbsttätig oder als Reaktion auf eine Anforderung, Übermitteln des Datenpakets an das Backend.

Gemäß einem weiteren Aspekt der Erfindung enthält ein computerlesbares Speichermedium Instruktionen, die bei Ausführung durch einen in einem Kraftfahrzeug angeordneten Computer den Computer zur Ausführung der folgenden Schritte zur Bestimmung einer Messposition für ein Datum, das durch eine Umgebungssensorik eines Kraftfahrzeugs erfasst wird, veranlassen:
- Bestimmen von Positionsdaten mittels eines Navigationssystems des Kraftfahrzeugs;
- Bestimmen von lokalen Umfelddaten mit Angaben zu visuellen Landmarken durch Auswertung von Bildern einer Kamera der Umgebungssensorik;
- Erfassen zumindest eines Datums, für das in einem Backend eine Messposition bestimmt werden soll, durch die Umgebungssensorik;
- Generieren eines Datenpakets durch Verknüpfen des Datums, der Positionsdaten und der lokalen Umfelddaten mit Angaben zu visuellen Landmarken, wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge; und
- selbsttätig oder als Reaktion auf eine Anforderung, Übermitteln des Datenpakets an das Backend.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine in einem Kraftfahrzeug angeordnete Vorrichtung zur Bestimmung einer Messposition für ein Datum, das durch eine Umgebungssensorik des Kraftfahrzeugs erfasst wird, auf:
- eine Zusatzdatenbestimmungseinheit zum Bestimmen von Positionsdaten, die von einem Navigationssystem des Kraftfahrzeugs bereitgestellt werden, und zum Bestimmen von lokalen Umfelddaten mit Angaben zu visuellen Landmarken durch Auswertung von Bildern einer Kamera der Umgebungssensorik;
- eine Datenerfassungseinheit zum Erfassen zumindest eines Datums, das durch die Umgebungssensorik des Kraftfahrzeugs bereitgestellt wird und für das in einem Backend eine Messposition bestimmt werden soll; und
- eine Datenverarbeitungseinheit zur Generierung eines Datenpakets durch Verknüpfen des Datums, der Positionsdaten und der lokalen Umfelddaten mit Angaben zu visuellen Landmarken, wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge;
wobei die Vorrichtung eingerichtet ist, das Datenpaket selbsttätig oder als Reaktion auf eine Anforderung an das Backend zu übermitteln.

In Hinblick auf ein Verfahren, das in einem Kraftfahrzeug eingesetzt werden kann, bzw. eine Vorrichtung, die in einem Kraftfahrzeug verbaut sein kann, wird ein erfasstes Datum vor dem Versand an ein Backend um von der Umgebungssensorik des Kraftfahrzeugs erfasste lokale Umfelddaten mit Angaben zu visuellen Landmarken erweitert. Basierend auf diesen lokalen Umfelddaten kann das Backend später eine verbesserte Bestimmung der Messposition vornehmen, beispielsweise die Spurzuordnung rekonstruieren.

Zunächst wird also eine relevante Information durch die Umgebungssensorik des Kraftahrzeugs ermittelt, d.h. es wird ein Datum erfasst. An diese Information werden üblicherweise die zugehörigen Positionsdaten angehängt, beispielsweise GPS Position, Ausrichtung, Geschwindigkeit, etc. Zusätzlich werden nun weitere lokale Umfelddaten angefügt. Diese durch die Umgebungssensorik des Kraftfahrzeugs erfassten lokalen Umfelddaten umfassen Angaben zu visuellen Landmarken. Unter visuellen Landmarken versteht man Objekte der Umgebung, die besonders hervorstechen, die sich also relativ leicht erfassen lassen. Derartige Landmarken haben den Vorteil, dass sie sich besonders gut für Entscheidungen über die Position des Fahrzeugs und somit die Position des erfassten Datums nutzen lassen. Diese Daten könne dann gesammelt an das Backend geschickt werden. Dort besteht jetzt die Möglichkeit, die Daten hochgenau zu verorten. Zu diesem Zweck können die Informationen über die lokalen Umfelddaten mit dem Backend zur Verfügung stehenden Daten aus einer Datenbank abgeglichen werden. Auf diese Weise lässt sich beispielsweise ermitteln, auf welcher Spur sich das Kraftfahrzeug aktuell befindet. Im einfachsten Fall ist hierbei eine singuläre Messung bereits für eine Spurzuordnung ausreichend. Führt die singuläre Messung zu keinem eindeutigen Ergebnis, kann die Historie der bestimmten Positionen für die Spurzuordnung genutzt werden.

Vorteilhaft an der beschriebenen Lösung ist, dass im Kraftfahrzeug keine Berechnungen für die Positionsbestimmung durchgeführt werden müssen, wodurch auch keine Rechenzeit für diesen Zweck aufgewendet werden muss. Zudem muss im Kraftfahrzeug keine Datenbank mit Daten für den Abgleich mit den lokalen Umfelddaten bereitgehalten werden, da dieser Abgleich im Backend erfolgt. Somit entstehen keine zusätzlichen Kosten für die Vorhaltung einer solchen Datenbank im Kraftfahrzeug. Ebenso entfällt der Aufwand für die fortwährende Aktualisierung der Daten in einer solchen Datenbank, für die eine nahezu durchgehende Datenanbindung des Kraftfahrzeugs erforderlich wäre. Durch die erfindungsgemäße Lösung werden der Aufwand im Fahrzeug und das zu transportierende Datenvolumen deutlich reduziert. Dadurch lässt sich die Lösung nicht nur in hochpreisigen Premiumfahrzeugen in Kombination mit diversen Zusatzpaketen umsetzen, sondern auch in Kraftfahrzeugen anderer Preisklassen. Dies ist von Vorteil, da für das Erzielen einer möglichst großen Messdichte das Bereitstellen von Daten idealerweise von möglichst vielen Fahrzeugen durchgeführt werden muss.

Durch die selbsttätige Übermittlung der Daten wird ein Push-Mechanismus realisiert, bei dem im Kraftfahrzeug hinterlegte Regeln festlegen, welche Daten zu welchen Zeitpunkten übermittelt werden. Im Gegensatz dazu werden bei einem Pull-Mechanismus die Daten aktiv angefordert, beispielsweise durch das Backend. So können z.B. Daten bevorzugt von Fahrzeugen angefordert werden, die sich in Regionen mit einer niedrigen Datenbasis bewegen. Ebenso ist es möglich, nur bestimmte Arten von Informationen anzufordern, z.B. Daten zum Straßenzustand, oder die Messfrequenz zu beeinflussen, z.B. um für bestimmte Daten eine höhere oder niedrigere Messdichte zu erzielen. Auf diese Weise lässt sich einerseits das anfallende Datenvolumen steuern und andererseits die Relevanz der erfassten Daten steigern.

Erfindungsgemäß ist ein Umfang der Positionsdaten und der lokalen Umfelddaten mit Angaben zu visuellen Landmarken in einem Datenpaket von der Art des zumindest einen erfassten Datums abhängig. So können beispielsweise für ein erfasstes Datum mit hohem Lokalisierungsbedarf, wie z.B. ein lokal erkanntes Schlagloch, viele Positionsdaten und lokale Umfelddaten mit Angaben zu visuellen Landmarken versendet werden, während für ein erfasstes Datum mit geringem Lokalisierungsbedarf, wie z.B. Glatteis, wenige Positionsdaten und lokale Umfelddaten mit Angaben zu visuellen Landmarken versendet werden. Auf diese Weise lässt sich der Datentransfer möglichst gering halten.

Gemäß einem Aspekt der Erfindung werden das zumindest eine erfasste Datum und die Positionsdaten und lokalen Umfelddaten mit Angaben zu visuellen Landmarken in einem Speicher des Kraftfahrzeugs abgelegt. Die Speicherung dieser Daten erlaubt es, Datenpakete erst dann zu generieren, wenn dies erforderlich ist, beispielsweise wenn sich herausstellt, dass eine Übermittlung der Daten erforderlich ist. Dies kann dann der Fall sein, wenn eine Datenverbindung verfügbar wird oder wenn in den erfassten Daten relevante Daten auftreten. Ebenso ermöglicht es die Speicherung, die Menge der lokalen Umfelddaten, die in ein Datenpaket aufgenommen werden, an die Art der relevanten Daten anzupassen. Zudem kann so auch nachträglich auf die gespeicherten Daten zugegriffen werden, beispielsweise falls durch das Backend zusätzliche Umfelddaten angefordert werden.

Gemäß einem Aspekt der Erfindung werden fortlaufend durch die Umgebungssensorik des Kraftfahrzeugs erfasste Daten, Positionsdaten und lokale Umfelddaten mit Angaben zu visuellen Landmarken zu Datenpaketen verknüpft oder es wird ein Datenpaket als Reaktion auf das zumindest eine erfasste Datum generiert. Die fortlaufende Generierung von Datenpaketen erfolgt unabhängig von der Erfassung eines speziellen, relevanten Ereignisses. So können beispielsweise Parkplatzdaten gesammelt werden, indem fortlaufend Daten der Ultraschallsensoren eines Parklenkassistenten erfasst und übermittelt werden. Ebenso können durch eine Auswertung der Messdaten von Regen-, Licht- oder Temperatursensoren Klimadaten erfasst werden. Die Generierung von Datenpaketen als Reaktion auf ein erfasstes Datum ist insbesondere für die Übermittlung von besonderen Ereignissen relevant. Besondere Ereignisse können beispielsweise Schlaglöcher, Verkehrszeichen, lokale oder nahegelegene Gefahrenstellen oder auch Straßenzustände wie Glatteis, Aquaplaning oder Verschmutzungen sein. Beispiele für Gefahrenstellen sind Unfälle, Sperrungen, Objekte oder Personen auf der Fahrbahn, Stauenden, Fahrzeuge mit Warnblinker oder Fahrzeuge auf dem Standstreifen, Baustellen oder Falschfahrer, um nur einige zu nennen.

Gemäß einem weiteren Aspekt der Erfindung umfasst ein Verfahren zur Bestimmung einer Messposition für ein Datum, das durch eine Umgebungssensorik eines Kraftfahrzeugs erfasst wird, wobei das Verfahren in einem Backend implementiert ist, die Schritte:
- Empfangen eines Datenpakets von einem Kraftfahrzeug;
- Extrahieren von Positionsdaten und lokalen Umfelddaten mit Angaben zu visuellen Landmarken aus dem Datenpaket;
- Extrahieren zumindest eines Datums aus dem Datenpaket, für das durch das Backend eine Messposition bestimmt werden soll;
- Verorten des zumindest einen Datums basierend auf den Positionsdaten und den lokalen Umfelddaten mit Angaben zu visuellen Landmarken; und
- Ablegen des verorteten Datums in einer Datenbank;
wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge.

Gemäß einem weiteren Aspekt der Erfindung enthält ein computerlesbares Speichermedium Instruktionen, die bei Ausführung durch einen in einem Backend angeordneten Computer den Computer zur Ausführung der folgenden Schritte zur Bestimmung einer Messposition für ein Datum, das durch ein Kraftfahrzeug erfasst wird , veranlassen:
- Empfangen eines Datenpakets von einem Kraftfahrzeug;
- Extrahieren von Positionsdaten und lokalen Umfelddaten mit Angaben zu visuellen Landmarken aus dem Datenpaket;
- Extrahieren zumindest eines Datums aus dem Datenpaket, für das durch das Backend eine Messposition bestimmt werden soll;
- Verorten des zumindest einen Datums basierend auf den Positionsdaten und den lokalen Umfelddaten mit Angaben zu visuellen Landmarken; und
- Ablegen des verorteten Datums in einer Datenbank;
wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge.

Der Begriff Computer ist auch hier breit zu verstehen. Insbesondere umfasst er auch Workstations und andere prozessorbasierte Datenverarbeitungsvorrichtungen.

Gemäß einem weiteren Aspekt der Erfindung weist eine in einem Backend angeordnete Vorrichtung zur Bestimmung einer Messposition für ein Datum, das durch ein Kraftfahrzeug erfasst wird, auf:
- eine Empfangseinheit zum Empfangen eines Datenpakets vom Kraftfahrzeug;
- eine Datenverarbeitungseinheit zum Extrahieren von Positionsdaten und lokalen Umfelddaten mit Angaben zu visuellen Landmarken aus dem Datenpaket und zum Extrahieren zumindest eines Datums aus dem Datenpaket, für das durch das Backend eine Messposition bestimmt werden soll; und
- eine Verortungseinheit zum Verorten des zumindest einen erfassten Datums, wobei die Verortungseinheit eingerichtet ist, das zumindest einen Datum basierend auf den Positionsdaten und den lokalen Umfelddaten mit Angaben zu visuellen Landmarken zu verorten und das verortete Datum in einer Datenbank abzulegen;
wobei ein Umfang der Positionsdaten und der lokalen Umfelddaten mit Angaben zu visuellen Landmarken in einem Datenpaket von der Art des zumindest einen erfassten Datums abhängig ist, wobei das Datenpaket für ein erfasstes Datum mit einem hohen Lokalisierungsbedarf eine erste Menge von Positionsdaten und lokalen Umfelddaten mit Angaben zu visuellen Landmarken umfasst und für ein erfasstes Datum mit einem geringen Lokalisierungsbedarf eine zweite Menge von Positionsdaten und lokalen Umfelddaten mit Angaben zu visuellen Landmarken umfasst, die geringer ist als die erste Menge.

In Hinblick auf ein Verfahren, das in einem Backend eingesetzt werden kann, bzw. eine Vorrichtung, die in einem Backend verbaut sein kann, wird zunächst ein von einem Kraftfahrzeug übermitteltes Datenpaket empfangen. Dabei muss die Verarbeitung durch das Backend nicht direkt nach dem Empfang erfolgen. Es ist gleichfalls möglich, dass empfangene Datenpakete zunächst gespeichert und erst später ausgewertet werden. Aus dem Datenpaket werden das von der Umgebungssensorik des Kraftfahrzeugs erfasste Datum sowie die Positionsdaten und lokalen Umfelddaten mit Angaben zu visuellen Landmarken extrahiert. Basierend auf den Positionsdaten und lokalen Umfelddaten mit Angaben zu visuellen Landmarken erfolgt eine Verortung des erfassten Datums, wobei insbesondere die durch die Umgebungssensorik des Kraftfahrzeugs erfassten lokalen Umfelddaten ausgewertet werden. Beispielsweise kann eine näherungsweise Verortung durch Auswertung von Positionsdaten im Datenpaket erfolgen, während für eine spurgenaue Verortung die lokalen Umfelddaten herangezogen werden. Zu diesem Zweck können die erfassten lokalen Umfelddaten beispielsweise mit einer digitalen Karte abgeglichen werden, auf die durch das Backend zugegriffen werden kann.

Vorteilhaft an der Bestimmung der Messposition durch das Backend ist, dass die Fahrzeuge selbst nicht über eine entsprechende Karte verfügen müssen, sondern diese lediglich für das Backend verfügbar sein muss. Die Karte kann somit auch direkt im Backend bzw. durch den Bereitsteller der Karte gepflegt werden. Zudem kann die Karte im Backend bezogen auf den jeweiligen Anwendungsfall optimiert werden. Wird beispielsweise eine Parkraumbelegungsinformation im Backend berechnet, müssen nur die relevanten Parkbereiche der Karte aktuell gehalten werden.

Gemäß einem Aspekt der Erfindung umfassen die visuellen Landmarken eines oder mehrere der folgenden Elemente: Spurmarkierungen, Fahrbahnbegrenzungen, Bodenmarkierungen, Verkehrszeichen, Leitpfosten, Schutzplanken, Lichtsignalanlagen und bauliche Objekte. Die aufgeführten Objekte lassen sich vergleichsweise leicht durch die Auswertung von Kameradaten ermitteln. Viele Kraftfahrzeuge sind heute bereits serienmäßig mit Kameras zur Umfelderfassung ausgestattet, beispielsweise für die Verkehrszeichenerkennung oder für die Nutzung durch einen Spurassistenten. Für die Erfassung der Umfelddaten zum Zwecke der Bestimmung der Messposition ist somit in der Regel keine weitere Hardware erforderlich, so dass sich die erfindungsgemäße Lösung kostengünstig realisieren lässt.

Gemäß einem Aspekt der Erfindung umfassen die Angaben zu Spurmarkierungen eine oder mehrere der folgenden Elemente: Angaben zum Abstand von einer Spurmarkierung, Angaben zur Existenz einer Spurmarkierung, Angaben zur Farbe einer Spurmarkierung, Angaben zur Art einer Spurmarkierung, Angaben zur Krümmung einer Spurmarkierung und Angaben zu einem Gierwinkel des Kraftfahrzeugs. Diese Daten werden durch die von aktuellen Spurassistenten genutzten Kamerasysteme typischerweise bereitgestellt, so dass kein weiterer Rechenaufwand für Ermittlung dieser Umfelddaten erforderlich ist. Gleichzeitig lassen sich die Angaben zu den Spurmarkierungen sehr leicht mit Kartendaten abgleichen. Die Angaben zum Gierwinkel erlauben es, die ermittelten Krümmungen der Spurmarkierungen zu verifizieren. Deutliche Abweichungen zwischen dem Gierwinkel und der Krümmung legen eine Fehlerfassung der Krümmung nahe. Die verfügbaren Daten einer Frontkamera sind in der folgenden Tabelle exemplarisch dargestellt, wobei der Eintrag "Y_Abstand" den Abstand des Fahrzeugzentrums zur Linie in der Y-Achse angibt, d.h. wie weit seitlich das Fahrzeug von der Spurmarkierung entfernt ist:

| |
|---|
| ECAN::BV_Linie_01::BV_Linie_01_Y_Abstand (12 Bit / 1Hz) |
| ECAN::BV_Linie_01::BV_Linie_01_Existenzmaß (6 Bit / 1Hz) |
| ECAN::BV_Linie_01::BV_Linie_01_Farbe (3 Bit / 1Hz) |
| ECAN::BV_Linie_01::BV_Linie_01_Gierwinkeldifferenz (12 Bit / 1Hz) |
| ECAN::BV_Linie_01::BV_Linie_01_horizontale_Krümmung_Änderung (12 Bit / 1Hz) |
| ECAN::BV_Linie_01::BV_Linie_01_horizontale_Krümmung (12 Bit / 1Hz) |
| ECAN::BV_Linie_01::BV_Linie_01_Liniennummer (4 Bit / 1 Hz) |
| ECAN::BV_Linie_01::BV_Linie_01_ Typ (3 Bit / 1 Hz) |
| ECAN::BV_Linie_02::BV_Linie_02_Y_Abstand (12 Bit / 1Hz) |
| ECAN::BV_Linie_02::BV_Linie_02_Existenzmaß (6 Bit / 1Hz) |
| ECAN::BV_Linie_02::BV_Linie_02_Farbe (3 Bit / 1Hz) |
| ECAN::BV_Linie_02::BV_Linie_02_Gierwinkeldifferenz (12 Bit / 1Hz) |
| ECAN::BV_Linie_02::BV_Linie_02_horizontale_Krümmung_Änderung (12 Bit / 1Hz) |
| ECAN::BV_Linie_02::BV_Linie_02_horizontale_Krümmung (12 Bit / 1Hz) |
| ECAN::BV_Linie_02::BV_Linie_02_Liniennummer (4 Bit / 1 Hz) |
| ECAN::BV_Linie_02::BV_Linie_02_Typ (3 Bit / 1 Hz) |
| ECAN::BV_Linie_03::BV_Linie_03_Y_Abstand (12 Bit / 1Hz) |
| ECAN::BV_Linie_03::BV_Linie_03_Existenzmaß (6 Bit / 1Hz) |
| ECAN::BV_Linie_03::BV_Linie_03_Farbe (3 Bit / 1Hz) |
| ECAN::BV_Linie_03::BV_Linie_03_Gierwinkeldifferenz (12 Bit / 1Hz) |
| ECAN::BV_Linie_03::BV_Linie_03_horizontale_Krümmung_Änderung (12 Bit / 1Hz) |
| ECAN::BV_Linie_03::BV_Linie_03_horizontale_Krümmung (12 Bit / 1Hz) |
| ECAN::BV_Linie_03::BV_Linie_03_Liniennummer (4 Bit / 1 Hz) |
| ECAN::BV_Linie_03::BV_Linie_03_Typ (3 Bit / 1 Hz) |
| ECAN::BV_Linie_04::BV_Linie_04_Y_Abstand (12 Bit / 1Hz) |
| ECAN::BV_Linie_04::BV_Linie_04_Existenzmaß (6 Bit / 1Hz) |
| ECAN::BV_Linie_04::BV_Linie_04_Farbe (3 Bit / 1Hz) |
| ECAN::BV_Linie_04::BV_Linie_04_Gierwinkeldifferenz (12 Bit / 1Hz) |
| ECAN::BV_Linie_04::BV_Linie_04_horizontale_Krümmung_Änderung (12 Bit / 1Hz) |
| ECAN::BV_Linie_04::BV_Linie_04_horizontale_Krümmung (12 Bit / 1Hz) |
| ECAN::BV_Linie_04::BV_Linie_04_Liniennummer (4 Bit / 1 Hz) |
| ECAN::BV_Linie_04::BV_Linie_04_Typ (3 Bit / 1 Hz) |

Beispielsweise werden jeweils vier Spuren von der Kamera erkannt, die Spuren rechts und links von der Eigenspur und die jeweilige noch fehlende Spur aus der benachbarten Spur. Befindet sich das sendende Fahrzeug auf einer mehrspurigen Straße mit zu vielen Fahrspuren, so dass die Messung zu keinem eindeutiges Ergebnis führt, kann die Historie der ermittelten Fahrspuren für die Spurzuordnung herangezogen werden. Im vorliegenden Beispiel kann dies bei fünf oder mehr Fahrspuren auftreten.

Vorzugsweise werden ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Bestimmung einer Messposition für ein durch eine Umgebungssensorik eines Kraftfahrzeugs erfasstes Datum aus Sicht des Kraftfahrzeugs;
- Fig. 2: zeigt eine erste Ausführungsform einer Vorrichtung zur Bestimmung einer Messposition für ein durch eine Umgebungssensorik eines Kraftfahrzeugs erfasstes Datum, die in einem Kraftfahrzeug verbaut sein kann;
- Fig. 3: zeigt eine zweite Ausführungsform einer Vorrichtung zur Bestimmung einer Messposition für ein durch eine Umgebungssensorik eines Kraftfahrzeugs erfasstes Datum, die in einem Kraftfahrzeug verbaut sein kann;
- Fig. 4: stellt schematisch ein Kraftfahrzeug dar, in dem eine erfindungsgemäße Lösung realisiert ist;
- Fig. 5: zeigt schematisch ein Verfahren zur Bestimmung einer Messposition für ein durch eine Umgebungssensorik eines Kraftfahrzeugs erfassten Datums aus Sicht eines Backends;
- Fig. 6: zeigt eine erste Ausführungsform einer Vorrichtung zur Bestimmung einer Messposition für ein durch eine Umgebungssensorik eines Kraftfahrzeugs erfasstes Datum, die in einem Backend verbaut sein kann;
- Fig. 7: zeigt eine zweite Ausführungsform einer Vorrichtung zur Bestimmung einer Messposition für ein durch eine Umgebungssensorik eines Kraftfahrzeugs erfasstes Datum, die in einem Backend verbaut sein kann;
- Fig. 8: veranschaulicht ein bekanntes System zur Erfassung und Positionsbestimmung von durch ein Kraftfahrzeug erfassten Daten;
- Fig. 9: veranschaulicht ein erfindungsgemäßes System zur Erfassung und Positionsbestimmung von durch ein Kraftfahrzeug erfassten Daten;
- Fig. 10: illustriert die fortlaufende Erfassung und Speicherung von Daten für eine Positionsbestimmung sowie die Erfassung und Speicherung von Daten zu einem lokalen Ereignis;
- Fig. 11: illustriert die Generierung eines Datenpakets als Reaktion auf ein erfasstes Ereignis;
- Fig. 12: zeigt die fortlaufende Erfassung und Speicherung von lokalen Daten und Daten für eine Positionsbestimmung; und
- Fig. 13: veranschaulicht die Nutzung der fortlaufenden Erfassung und Speicherung von lokalen Daten und Daten für eine Positionsbestimmung am Beispiel von Parkplatzdaten.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

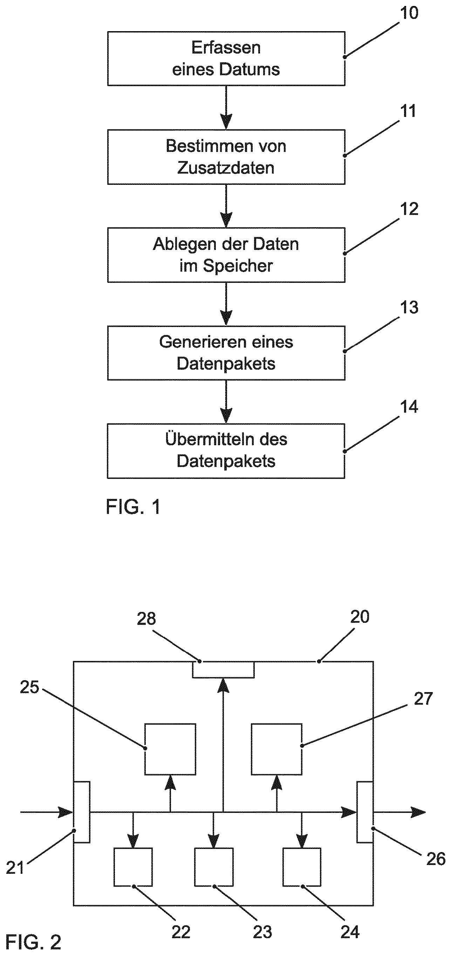

Fig. 1 zeigt schematisch ein Verfahren zur Bestimmung einer Messposition für ein durch eine Umgebungssensorik eines Kraftfahrzeugs erfasstes Datum aus Sicht des Kraftfahrzeugs. In einem ersten Schritt wird zumindest ein Datum durch die Umgebungssensorik erfasst 10. Zudem werden Zusatzdaten bestimmt 11, die eine Bestimmung einer Messposition für das zumindest eine erfasste Datum ermöglichen. Die Zusatzdaten umfassen zumindest durch ein Navigationssystem des Kraftfahrzeugs bestimmte Positionsdaten und durch die Umgebungssensorik erfasste lokale Umfelddaten mit Angaben zu visuellen Landmarken. Das zumindest eine erfasste Datum und die Zusatzdaten können dabei in einem Speicher des Kraftfahrzeugs abgelegt 12 werden. In einem weiteren Schritt wird durch Verknüpfen der Zusatzdaten mit dem zumindest einen erfassten Datum ein Datenpaket generiert 13. Ein Umfang der Zusatzdaten in einem Datenpaket ist dabei von der Art des zumindest einen erfassten Datums abhängig, wobei das Datenpaket für ein erfasstes Datum mit einem hohen Lokalisierungsbedarf eine erste Menge von Zusatzdaten umfasst und für ein erfasstes Datum mit einem geringen Lokalisierungsbedarf eine zweite Menge von Zusatzdaten umfasst, die geringer ist als die erste Menge. Das Datenpaket wird schließlich selbsttätig oder als Reaktion auf eine Anforderung an ein Backend übermittelt 14. Die durch die Umgebungssensorik erfassten Daten und Zusatzdaten können fortlaufend zu Datenpaketen verknüpft werden. Alternativ oder zusätzlich kann ein Datenpaket auch als Reaktion auf das zumindest eine erfasste Datum generiert 13 werden.

Fig. 2 zeigt eine vereinfachte schematische Darstellung einer ersten Ausführungsform einer Vorrichtung 20 zur Bestimmung einer Messposition für ein durch eine Umgebungssensorik eines Kraftfahrzeugs erfasstes Datum, die in einem Kraftfahrzeug verbaut sein kann. Die Vorrichtung 20 hat einen Eingang 21 zum Empfangen von Daten, die eine Bestimmung einer Messposition erlauben. Eine Datenerfassungseinheit 22 erfasst mittels der Umgebungssensorik zumindest ein Datum. Eine Zusatzdatenbestimmungseinheit 23 bestimmt Zusatzdaten, die eine Bestimmung einer Messposition für das zumindest eine erfasste Datum ermöglichen. Die Zusatzdaten umfassen zumindest durch ein Navigationssystem des Kraftfahrzeugs bestimmte Positionsdaten und lokale Umfelddaten mit Angaben zu visuellen Landmarken, die durch die Umgebungssensorik erfasst wurden. Eine Datenverarbeitungseinheit 24 generiert schließlich ein Datenpaket durch Verknüpfen der Zusatzdaten mit dem zumindest einen erfassten Datum. Ein Umfang der Zusatzdaten in einem Datenpaket ist dabei von der Art des zumindest einen erfassten Datums abhängig, wobei das Datenpaket für ein erfasstes Datum mit einem hohen Lokalisierungsbedarf eine erste Menge von Zusatzdaten umfasst und für ein erfasstes Datum mit einem geringen Lokalisierungsbedarf eine zweite Menge von Zusatzdaten umfasst, die geringer ist als die erste Menge. Die durch die Umgebungssensorik erfassten Daten und Zusatzdaten können fortlaufend zu Datenpaketen verknüpft werden. Alternativ oder zusätzlich kann ein Datenpaket auch als Reaktion auf das zumindest eine erfasste Datum generiert werden. Die von der Datenverarbeitungseinheit 24 generierten Datenpakete werden selbsttätig oder als Reaktion auf eine Anforderung über einen Ausgang 26 der Vorrichtung 20 an ein Backend übermittelt.

Die Datenerfassungseinheit 22, die Zusatzdatenbestimmungseinheit 23 und die Datenverarbeitungseinheit 24 können von einer Kontrolleinheit 25 gesteuert werden. Über eine Benutzerschnittstelle 28 können gegebenenfalls Einstellungen der Datenerfassungseinheit 22, der Zusatzdatenbestimmungseinheit 23, der Datenverarbeitungseinheit 24 oder der Kontrolleinheit 25 geändert werden. Die in der Vorrichtung 20 anfallenden Daten, beispielsweise das zumindest eine erfasste Datum, die Zusatzdaten oder die generierten Datenpakete, können dabei in einem Speicher 27 der Vorrichtung 20 abgelegt werden, beispielsweise für eine spätere Auswertung oder für eine Nutzung durch die Komponenten der Vorrichtung 20. Die Datenerfassungseinheit 22, die Zusatzdatenbestimmungseinheit 23, die Datenverarbeitungseinheit 24 sowie die Kontrolleinheit 25 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein.

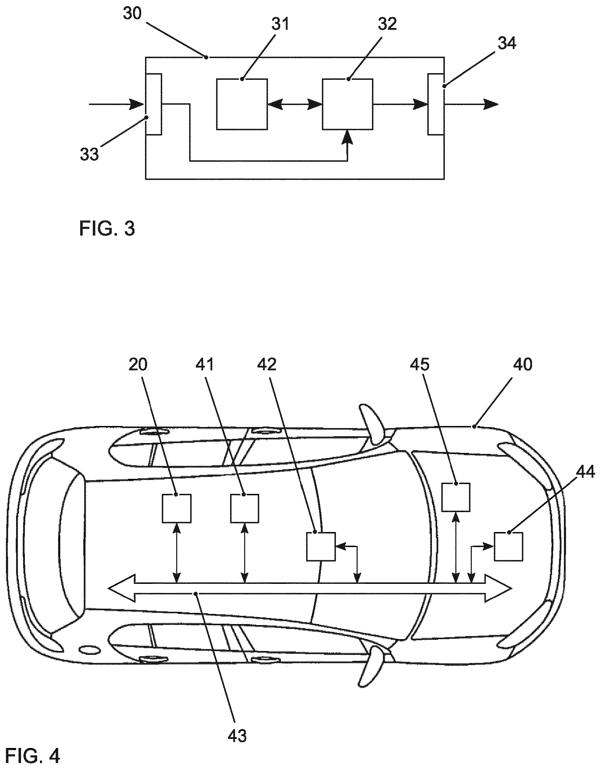

Fig. 3 zeigt eine vereinfachte schematische Darstellung einer zweiten Ausführungsform einer Vorrichtung 30 zur Bestimmung einer Messposition für ein durch eine Umgebungssensorik eines Kraftfahrzeugs erfasstes Datum, die in einem Kraftfahrzeug verbaut sein kann. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen, beispielsweise von Daten, die von der Umgebungssensorik erfasst wurden. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist unter anderem ein Navigationssystem 41 und eine Umgebungssensorik 42 auf, beispielsweise ein Kamera- oder Radarsystem. Die vom Navigationssystem 41 und der Umgebungssensorik 42 erfassten Daten werden über ein Netzwerk 43 an eine Vorrichtung 20 zur Bestimmung einer Messposition übermittelt. Die von der Vorrichtung 20 generierten Daten werden in einem Speicher 44 des Kraftfahrzeugs 40 abgelegt und bei Bedarf mittels einer Kommunikationseinheit 45 zur Auswertung an ein Backend übermittelt.

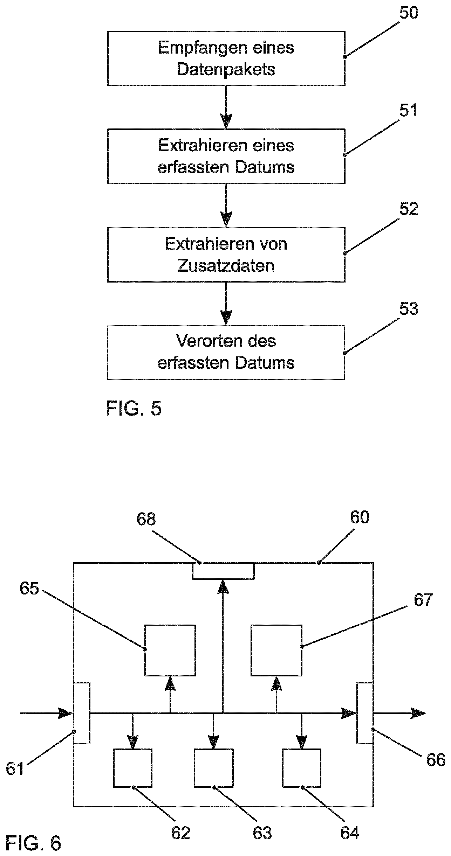

Fig. 5 zeigt schematisch ein Verfahren zur Bestimmung einer Messposition für ein durch eine Umgebungssensorik eines Kraftfahrzeugs erfasstes Datum aus Sicht eines Backends. In einem ersten Schritt wird ein von einem Kraftfahrzeug übermitteltes Datenpaket empfangen 50. Aus dem empfangenen Datenpaket wird anschließend zumindest ein von der Umgebungssensorik erfasstes Datum extrahiert 51. Ebenso werden Zusatzdaten aus dem Datenpaket extrahiert 52, die eine Bestimmung einer Messposition für das zumindest eine erfasste Datum ermöglichen. Die Zusatzdaten umfassen zumindest durch ein Navigationssystem des Kraftfahrzeugs bestimmte Positionsdaten und lokale Umfelddaten mit Angaben zu visuellen Landmarken, die durch die Umgebungssensorik erfasst wurden. Ein Umfang der Zusatzdaten in einem Datenpaket ist dabei von der Art des zumindest einen erfassten Datums abhängig, wobei das Datenpaket für ein erfasstes Datum mit einem hohen Lokalisierungsbedarf eine erste Menge von Zusatzdaten umfasst und für ein erfasstes Datum mit einem geringen Lokalisierungsbedarf eine zweite Menge von Zusatzdaten umfasst, die geringer ist als die erste Menge. Schließlich wird das zumindest eine erfasste Datum basierend auf den Positionsdaten und den Zusatzdaten verortet 53. Für das Verorten 53 werden dabei die in den Zusatzdaten enthaltenen, durch die Umgebungssensorik erfassten lokalen Umfelddaten ausgewertet. Zu diesem Zweck können die erfassten lokalen Umfelddaten mit einer digitalen Karte abgeglichen werden.

Fig. 6 zeigt eine vereinfachte schematische Darstellung einer ersten Ausführungsform einer Vorrichtung 60 zur Bestimmung einer Messposition für ein durch eine Umgebungssensorik eines Kraftfahrzeugs erfasstes Datum, die in einem Backend verbaut sein kann. Die Vorrichtung 60 hat einen Eingang 61 zum Empfangen von Daten, die eine Bestimmung einer Messposition erlauben. Eine Empfangseinheit 62 empfängt zunächst ein Datenpaket von einem Kraftfahrzeug. Dabei kann das Datenpaket unmittelbar nach der Übermittlung durch das Kraftfahrzeug oder erst nach im Anschluss an eine temporäre Speicherung von der Empfangseinheit 62 empfangen werden. Eine Datenverarbeitungseinheit 63 extrahiert zumindest ein von der Umgebungssensorik erfasstes Datum sowie Zusatzdaten, die eine Bestimmung einer Messposition für das zumindest eine erfasste Datum ermöglichen, aus dem Datenpaket. Die Zusatzdaten umfassen zumindest durch ein Navigationssystem des Kraftfahrzeugs bestimmte Positionsdaten und lokale Umfelddaten mit Angaben zu visuellen Landmarken, die durch die Umgebungssensorik erfasst wurden. Ein Umfang der Zusatzdaten in einem Datenpaket ist dabei von der Art des zumindest einen erfassten Datums abhängig, wobei das Datenpaket für ein erfasstes Datum mit einem hohen Lokalisierungsbedarf eine erste Menge von Zusatzdaten umfasst und für ein erfasstes Datum mit einem geringen Lokalisierungsbedarf eine zweite Menge von Zusatzdaten umfasst, die geringer ist als die erste Menge. Eine Verortungseinheit 64 verortet schließlich das zumindest eine erfasste Datum basierend auf den Positionsdaten und den Zusatzdaten. Zu diesem Zweck wertet die Verortungseinheit 64 die durch die Umgebungssensorik erfassten lokalen Umfelddaten aus. Die von der Verortungseinheit 64 generierten Daten werden über einen Ausgang 66 der Vorrichtung 60 zur weiteren Verarbeitung bereitgestellt oder in einer Datenbank 69 abgelegt. Die Datenbank 69 kann dabei Bestandteil der Vorrichtung 60 sein. Sie kann alternativ auch über den Ausgang 66 mit der Vorrichtung 60 verbunden sein. Die Empfangseinheit 62, die Datenverarbeitungseinheit 63 und die Verortungseinheit 64 können von einer Kontrolleinheit 65 gesteuert werden. Über eine Benutzerschnittstelle 68 können gegebenenfalls Einstellungen der Empfangseinheit 62, der Datenverarbeitungseinheit 63, der Verortungseinheit 64 oder der Kontrolleinheit 65 geändert werden. Die in der Vorrichtung 60 anfallenden Daten können dabei in einem Speicher 67 der Vorrichtung 60 abgelegt werden, beispielsweise für eine spätere Auswertung oder für eine Nutzung durch die Komponenten der Vorrichtung 60. Die Empfangseinheit 62, die Datenverarbeitungseinheit 63, die Verortungseinheit 64 sowie die Kontrolleinheit 65 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 61 und der Ausgang 66 können als getrennte Schnittstellen oder als eine kombinierte bidirektionale Schnittstelle implementiert sein.

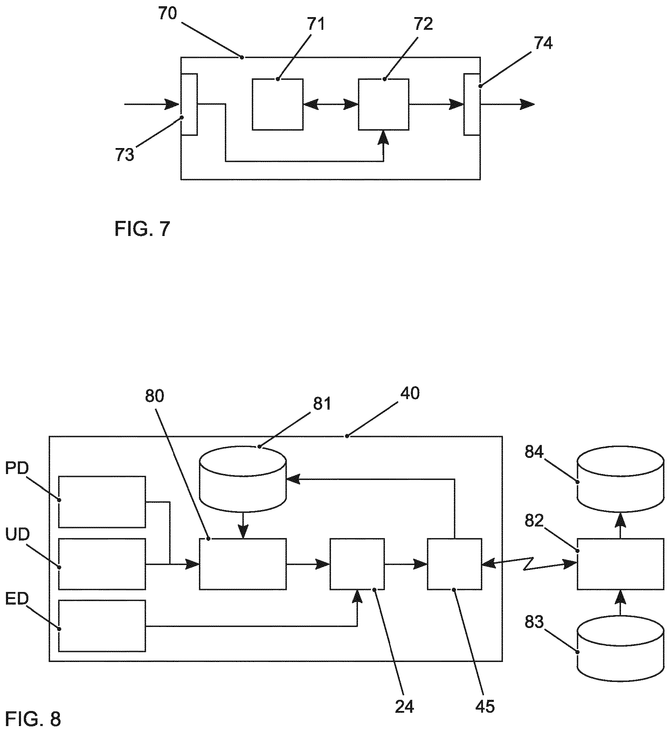

Fig. 7 zeigt eine vereinfachte schematische Darstellung einer zweiten Ausführungsform einer Vorrichtung 70 zur Bestimmung einer Messposition für ein durch eine Umgebungssensorik eines Kraftfahrzeugs erfasstes Datum, die in einem Backend verbaut sein kann. Die Vorrichtung 70 weist einen Prozessor 72 und einen Speicher 71 auf. Beispielsweise handelt es sich bei der Vorrichtung 70 um einen Computer oder eine Workstation. Im Speicher 71 sind Instruktionen abgelegt, die die Vorrichtung 70 bei Ausführung durch den Prozessor 72 veranlassen, die Schritte gemäß einem der beschriebenen Verfahren auszuführen. Die im Speicher 71 abgelegten Instruktionen verkörpern somit ein durch den Prozessor 72 ausführbares Programm, welches das erfindungsgemäße Verfahren realisiert. Die Vorrichtung hat einen Eingang 73 zum Empfangen von Informationen, beispielsweise von einem Datenpaket, das von einem Kraftfahrzeug übermittelt wurde. Vom Prozessor 72 generierte Daten werden über einen Ausgang 74 bereitgestellt. Darüber hinaus können sie im Speicher 71 abgelegt werden. Der Eingang 73 und der Ausgang 74 können zu einer bidirektionalen Schnittstelle zusammengefasst sein.

Der Prozessor 72 kann eine oder mehrere Prozessoreinheiten umfassen, beispielsweise Mikroprozessoren, digitale Signalprozessoren oder Kombinationen daraus.

Die Speicher 67, 71 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Nachfolgend soll eine bevorzugte Ausführungsform der Erfindung anhand der Figuren 8 bis 13 erläutert werden.

Fig. 8 veranschaulicht ein bekanntes System zur Erfassung und Positionsbestimmung von durch ein Kraftfahrzeug 40 erfassten Daten. Positionsdaten PD sowie von einer Umfeldsensorik des Kraftfahrzeugs 40 erfasste Umfelddaten UD, beispielsweise Spurmarkierungen, werden einem Ortungsalgorithmus 80 des Kraftfahrzeugs 40 bereitgestellt. Basierend auf diesen Daten bestimmt der Ortungsalgorithmus 80 mit Hilfe einer hochgenauen digitalen Karte 81 eine aktuelle Position des Kraftfahrzeugs 40. Ein ebenfalls von der Umfeldsensorik des Kraftfahrzeugs 40 erfasstes Datum ED wird an eine Datenverarbeitungseinheit 24 weitergegeben, die aus dem erfassten Datum ED und der vom Ortungsalgorithmus 80 bestimmten aktuellen Position des Kraftfahrzeugs 40 ein Datenpaket generiert. Dieses wird über eine Kommunikationseinheit 45 an ein Backend 82 übertragen. Auf Grundlage des übermittelten Datenpakets und einer weiteren hochgenauen Karte 83 bestimmt das Backend Informationen, die in eine Ereignisdatenbank 84 eingetragen werden.

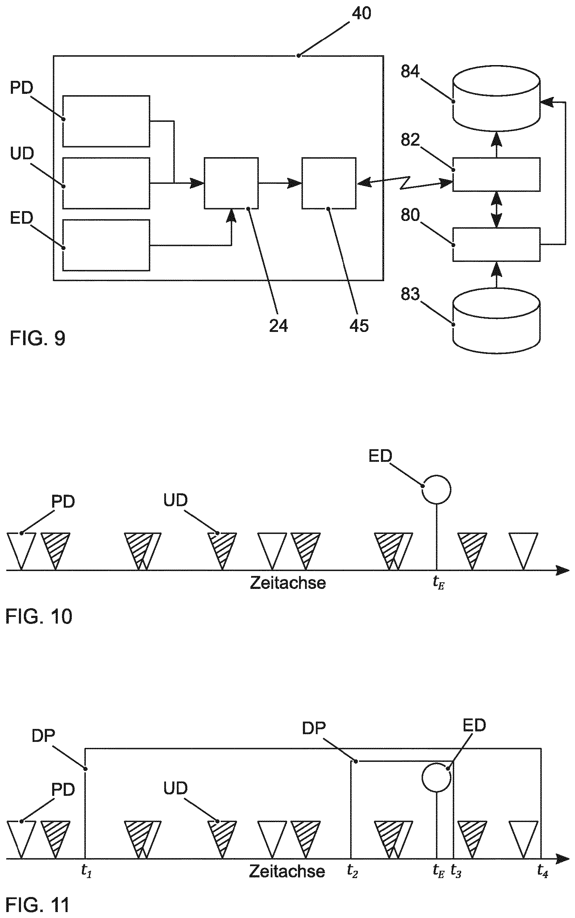

Fig. 9 veranschaulicht ein erfindungsgemäßes System zur Erfassung und Positionsbestimmung von durch ein Kraftfahrzeug 40 erfassten Daten. Erfindungsgemäß wird dabei auf die hochgenaue Bestimmung einer Messposition innerhalb des Kraftfahrzeugs 40 verzichtet. Stattdessen wird diese Bestimmung der Messposition vollständig im Backend 82 durchgeführt. Positionsdaten PD, die von einer Umfeldsensorik des Kraftfahrzeugs 40 erfassten Umfelddaten UD sowie ein von der Umfeldsensorik des Kraftfahrzeugs 40 erfasstes Datum ED werden an eine Datenverarbeitungseinheit 24 weitergegeben, die aus diesen Daten ein Datenpaket generiert. Dieses wird über eine Kommunikationseinheit 45 an ein Backend 82 übertragen. Ein Ortungsalgorithmus 80 auf Seiten des Backends bestimmt nun auf Grundlage des übermittelten Datenpakets und einer hochgenauen Karte 83 diejenigen Informationen, die in eine Ereignisdatenbank 84 eingetragen werden.

Fig. 10 illustriert schematisch auf einer Zeitachse die fortlaufende Erfassung und Speicherung von Daten PD, UD für eine Positionsbestimmung sowie die Erfassung und Speicherung von Daten ED zu einem lokalen Ereignis. Bei der fortlaufenden Erfassung werden die Daten in diskreten, regelmäßigen oder auch unregelmäßigen zeitlichen Abständen erfasst und dabei von den Sensoren zeitgestempelt gemäß ihrer eigenen Messfrequenz in eine Datenbank aufgenommen. Im konkreten Beispiel werden Positionsdaten PD mit einer ersten Messfrequenz und Umfelddaten UD mit einer zweiten Messfrequenz erfasst und abgespeichert. Dabei können für die unterschiedlichen Messungen durchaus verschiedene Messfrequenzen verwendet werden. Zu einem Zeitpunkt *t_{E}* werden Daten ED zu einem lokalen Ereignis erfasst und abgespeichert.

Fig. 11 illustriert die Generierung eines Datenpakets DP als Reaktion auf ein erfasstes Ereignis. Zum Versand der Daten werden diese gemäß den Lokalisierungsanforderungen aus der Datenbank entnommen, zu einem Datenpaket DP verknüpft und versendet. Die Lokalisierungsanforderungen hängen dabei von der Art des Ereignisses ab. Ein lokal erkanntes Schlagloch weist beispielsweise einen hohen Lokalisierungsbedarf auf, so dass das generierte Datenpaket DP relativ viele Daten umfasst. In Fig. 11 sind dies die zwischen den Zeitpunkten *t*₁ und *t*₄ erfassten Positionsdaten PD und Umfelddaten UD. Für großflächige Ereignisse, wie beispielsweise Glatteis, müssen nur wenige Daten versendet werden. In Fig. 11 sind dies die zwischen den Zeitpunkten *t*₂ und *t*₃ erfassten Positionsdaten PD und Umfelddaten UD. Auf diese Weise lässt sich der erforderliche Datentransfer minimieren.

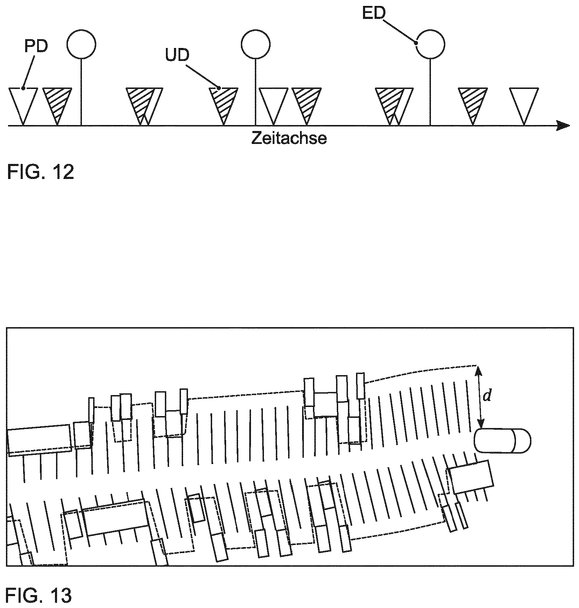

Fig. 12 zeigt die fortlaufende Erfassung und Speicherung von erfassten lokalen Daten ED und Daten PD, UD für eine Positionsbestimmung. Unabhängig von einem besonderen Ereignis werden fortlaufend lokale Daten ED erfasst, beispielsweise Klimadaten oder Daten der Ultraschallsensoren eines Parklenkassistenten. Wie schon zuvor handelt es sich bei der fortlaufenden Erfassung um diskrete Messungen in regelmäßigen oder auch unregelmäßigen zeitlichen Abständen. Die erfassten lokalen Daten ED werden fortlaufend mit für die Positionsbestimmung benötigten Daten PD, UD hinterlegt. Die Größe der aus diesen Daten generierten Datenpakete kann wie bereits zuvor von den Lokalisierungsanforderungen abhängen.

Ein kontinuierlicher Datenstrom vom Fahrzeug zum Backend ist gemäß den oben beschriebenen Strukturen nicht erforderlich. Die Daten werden nur übermittelt, wenn es hierzu relevante erkannte lokale Daten im Fahrzeug gibt, beispielsweise weil ein relevantes Ereignis festgestellt wurde oder eine konkrete Anforderung von Daten vorliegt. Damit ist sichergestellt, dass Übertragungskosten nur anfallen, wenn es einen entsprechenden Nutzen in den Daten gibt.

Fig. 13 veranschaulicht die Nutzung der fortlaufenden Erfassung und Speicherung von lokalen Daten und Daten für eine Positionsbestimmung am Beispiel von Parkplatzdaten. In diesem Beispiel werden durchgängig Abstände *d* erfasst (gestrichelte Linie) und in einem Datensatz pro Sekunde zusammengefasst. Die Abstände können beispielsweise durch Ultraschallsensoren des Kraftfahrzeugs 40 erfasst werden. Die dabei erzeugten Daten können besonders vorteilhaft in die in Fig. 12 beschriebene Struktur integriert werden und je nach Bedarf mit Positionsdaten angereichert werden. Hierbei besteht die Möglichkeit, nicht nur Bereiche um die Parkdaten mit Daten für die Positionsbestimmung anzureichern, sondern entsprechend der Ortungsverfahren im Backend die Messfrequenz der Daten für die Positionsbestimmung generell anzupassen.

### Bezugszeichenliste

- 10: Erfassen eines Datums
- 11: Bestimmen von Zusatzdaten
- 12: Ablegen der Daten im Speicher
- 13: Generieren eines Datenpakets
- 14: Übermitteln des Datenpakets
- 20: Vorrichtung
- 21: Eingang
- 22: Datenerfassungseinheit
- 23: Zusatzdatenbestimmungseinheit
- 24: Datenverarbeitungseinheit
- 25: Kontrolleinheit
- 26: Ausgang
- 27: Speicher
- 28: Benutzerschnittstelle
- 30: Vorrichtung
- 31: Speicher
- 32: Prozessor
- 33: Eingang
- 34: Ausgang
- 40: Kraftfahrzeug
- 41: Navigationssystem
- 42: Umgebungssensorik
- 43: Netzwerk
- 44: Speicher
- 45: Kommunikationseinheit
- 50: Empfangen eines Datenpakets
- 51: Extrahieren eines erfassten Datums
- 52: Extrahieren von Zusatzdaten
- 53: Verorten des erfassten Datums
- 60: Vorrichtung
- 61: Eingang
- 62: Empfangseinheit
- 63: Datenverarbeitungseinheit
- 64: Verortungseinheit
- 65: Kontrolleinheit
- 66: Ausgang
- 67: Speicher
- 68: Benutzerschnittstelle
- 69: Datenbank
- 70: Vorrichtung
- 71: Speicher
- 72: Prozessor
- 73: Eingang
- 74: Ausgang
- 80: Ortungsalgorithmus
- 81: Karte
- 82: Backend
- 83: Karte
- 84: Ereignisdatenbank
- PD: Positionsdaten
- UD: Umfelddaten
- ED: Erfasstes Datum
- DP: Datenpaket

## Patentansprüche

1. Verfahren zur Bestimmung einer Messposition für ein Datum (ED), das durch eine Umgebungssensorik (42) eines Kraftfahrzeugs (40) erfasst wird, wobei das Verfahren im Kraftfahrzeug (40) implementiert ist, mit den Schritten:
- Bestimmen (11) von Positionsdaten (PD) mittels eines Navigationssystems (41) des Kraftfahrzeugs (40); und
- Bestimmen (11) von lokalen Umfelddaten (UD) mit Angaben zu visuellen Landmarken durch Auswertung von Bildern einer Kamera der Umgebungssensorik (42);
**gekennzeichnet durch:**
- Erfassen (10) zumindest eines Datums (ED), für das in einem Backend (83) eine Messposition bestimmt werden soll, durch die Umgebungssensorik (42);
- Generieren (13) eines Datenpakets (DP) durch Verknüpfen des Datums (ED), der Positionsdaten (PD) und der lokalen Umfelddaten (UD) mit Angaben zu visuellen Landmarken, wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge; und
- selbsttätig oder als Reaktion auf eine Anforderung, Übermitteln (14) des Datenpakets (DP) an das Backend (83).

2. Verfahren gemäß Anspruch 1, **wobei** das zumindest eine Datum (ED), für das im Backend (83) eine Messposition bestimmt werden soll, mittels eines Ultraschallsensors, eines Regensensors, eines Lichtsensors oder eines Temperatursensors erfasst wird (10).

3. Verfahren gemäß Anspruch 1 oder 2, **wobei** fortlaufend durch die Umgebungssensorik (42) des Kraftfahrzeugs (40) erfasste Daten (ED), Positionsdaten (PD) und lokale Umfelddaten (UD) mit Angaben zu visuellen Landmarken zu Datenpaketen (DP) verknüpft werden oder ein Datenpaket (DP) als Reaktion auf das zumindest eine erfasste Datum (ED) generiert (13) wird.

4. Verfahren gemäß einem der vorherigen Ansprüche, **wobei** das zumindest eine Datum (ED) ein klimabezogenes Datum, ein parkplatzbezogenes Datum oder ein auf ein besonderes Ereignis im Umfeld des Kraftfahrzeugs (40) bezogenes Datum ist.

5. Verfahren zur Bestimmung einer Messposition für ein Datum (ED), das durch eine Umgebungssensorik (42) eines Kraftfahrzeugs (40) erfasst wurde, wobei das Verfahren in einem Backend (83) implementiert ist, mit den Schritten:
- Empfangen (50) eines Datenpakets (DP) von einem Kraftfahrzeug (40); und
- Extrahieren (52) von Positionsdaten (PD) und lokalen Umfelddaten (UD) mit Angaben zu visuellen Landmarken aus dem Datenpaket (DP);
**gekennzeichnet durch:**
- Extrahieren (51) zumindest eines Datums (ED) aus dem Datenpaket (DP), für das durch das Backend (83) eine Messposition bestimmt werden soll;
- Verorten (53) des zumindest einen Datums (ED) basierend auf den Positionsdaten (PD) und den lokalen Umfelddaten (UD) mit Angaben zu visuellen Landmarken; und
- Ablegen des verorteten Datums (ED) in einer Datenbank (69);
wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge.

6. Verfahren gemäß Anspruch 5, **wobei** das Verorten (53) des zumindest einen Datums (ED) einen Abgleich der lokalen Umfelddaten (UD) mit Angaben zu visuellen Landmarken mit einer digitalen Karte umfasst.

7. Verfahren gemäß einem der vorherigen Ansprüche, **wobei** die visuellen Landmarken eines oder mehrere der folgenden Elemente umfassen: Spurmarkierungen, Fahrbahnbegrenzungen, Bodenmarkierungen, Verkehrszeichen, Leitpfosten, Schutzplanken, Lichtsignalanlagen und bauliche Objekte.

8. Verfahren gemäß Anspruch 7, **wobei** die Angaben zu Spurmarkierungen eine oder mehrere der folgenden Elemente umfassen: Angaben zum Abstand von einer Spurmarkierung, Angaben zur Existenz einer Spurmarkierung, Angaben zur Farbe einer Spurmarkierung, Angaben zur Art einer Spurmarkierung, Angaben zur Krümmung einer Spurmarkierung und Angaben zu einem Gierwinkel des Kraftfahrzeugs.

9. Computerlesbares Speichermedium mit Instruktionen, die bei Ausführung durch einen Computer den Computer zur Ausführung der Schritte eines Verfahrens gemäß einem der Ansprüche 1 bis 8 zur Bestimmung einer Messposition für ein durch ein Kraftfahrzeug (40) erfassten Datums (ED) veranlassen.

10. Vorrichtung (20) zur Verwendung in einem Kraftfahrzeug (40) zur Bestimmung einer Messposition für ein Datum (ED), das durch eine Umgebungssensorik (42) des Kraftfahrzeugs (40) erfasst wird, mit einer Zusatzdatenbestimmungseinheit (23) zum Bestimmen (11) von Positionsdaten (PD), die von einem Navigationssystem (41) des Kraftfahrzeugs (40) bereitgestellt werden, und zum Bestimmen (11) von lokalen Umfelddaten (UD) mit Angaben zu visuellen Landmarken durch Auswertung von Bildern einer Kamera der Umgebungssensorik (42);
**gekennzeichnet durch:**
- eine Datenerfassungseinheit (22) zum Erfassen (10) zumindest eines Datums (ED), das durch die Umgebungssensorik (42) bereitgestellt wird und für das in einem Backend (83) eine Messposition bestimmt werden soll; und
- eine Datenverarbeitungseinheit (24) zum Generieren (13) eines Datenpakets (DP) durch Verknüpfen des Datums (ED), der Positionsdaten (PD) und der lokalen Umfelddaten (UD) mit Angaben zu visuellen Landmarken, wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge;
wobei die Vorrichtung (20) eingerichtet ist, das Datenpaket (DP) selbsttätig oder als Reaktion auf eine Anforderung an das Backend (83) zu übermitteln (14).

11. Vorrichtung (50) zur Verwendung in einem Backend (83) zur Bestimmung einer Messposition für ein Datum (ED), das durch eine Umgebungssensorik (42) eines Kraftfahrzeugs (40) erfasst wurde, mit:
- einer Empfangseinheit (62) zum Empfangen (50) eines Datenpakets (DP) von einem Kraftfahrzeug (40); und
- einer Datenverarbeitungseinheit (63) zum Extrahieren (51) von Positionsdaten (PD) und lokalen Umfelddaten (UD) mit Angaben zu visuellen Landmarken aus dem Datenpaket (DP);
**dadurch gekennzeichnet, dass**
- die Datenverarbeitungseinheit (63) eingerichtet ist, zumindest ein Datum (ED) aus dem Datenpaket (DP) zu extrahieren (51), für das durch das Backend (83) eine Messposition bestimmt werden soll; und
- die Vorrichtung (50) eine Verortungseinheit (64) zum Verorten (53) des zumindest einen Datums (ED) aufweist, die eingerichtet ist, das zumindest einen Datum (ED) basierend auf den Positionsdaten (PD) und den lokalen Umfelddaten (UD) mit Angaben zu visuellen Landmarken zu verorten (53) und das verortete Datum (ED) in einer Datenbank (69) abzulegen
wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge.

12. Kraftfahrzeug (40), **dadurch gekennzeichnet, dass** es eine Vorrichtung (20) gemäß Anspruch 10 aufweist oder eingerichtet ist, ein Verfahren gemäß einem der Ansprüche 1 bis 4 zur Bestimmung einer Messposition für ein durch eine Umgebungssensorik (42) des Kraftfahrzeugs (40) erfasstes Datums (ED) auszuführen.

1. Verfahren zur Bestimmung einer Messposition für ein Datum (ED), das durch eine Umgebungssensorik (42) eines Kraftfahrzeugs (40) erfasst wird, wobei das Verfahren im Kraftfahrzeug (40) implementiert ist, mit den Schritten:
- Bestimmen (11) von Positionsdaten (PD) mittels eines Navigationssystems (41) des Kraftfahrzeugs (40); und
- Bestimmen (11) von lokalen Umfelddaten (UD) mit Angaben zu visuellen Landmarken durch die Umgebungssensorik (42);
- Erfassen (10) zumindest eines Datums (ED), für das in einem Backend (83) eine Messposition bestimmt werden soll, durch die Umgebungssensorik (42);
- Generieren (13) eines Datenpakets (DP) durch Verknüpfen des Datums (ED), der Positionsdaten (PD) und der lokalen Umfelddaten (UD) mit Angaben zu visuellen Landmarken, wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge; und
- selbsttätig oder als Reaktion auf eine Anforderung, Übermitteln (14) des Datenpakets (DP) an das Backend (83).

2. Verfahren gemäß Anspruch 1, **wobei** das zumindest eine Datum (ED), für das im Backend (83) eine Messposition bestimmt werden soll, mittels eines Ultraschallsensors, eines Regensensors, eines Lichtsensors oder eines Temperatursensors erfasst wird (10).

3. Verfahren gemäß Anspruch 1 oder 2, **wobei** die lokalen Umfelddaten (UD) mit Angaben zu visuellen Landmarken durch Auswertung von Bildern einer Kamera bestimmt werden (11).

4. Verfahren gemäß einem der vorherigen Ansprüche, **wobei** fortlaufend durch die Umgebungssensorik (42) des Kraftfahrzeugs (40) erfasste Daten (ED), Positionsdaten (PD) und lokale Umfelddaten (UD) mit Angaben zu visuellen Landmarken zu Datenpaketen (DP) verknüpft werden oder ein Datenpaket (DP) als Reaktion auf das zumindest eine erfasste Datum (ED) generiert (13) wird.

5. Verfahren gemäß einem der vorherigen Ansprüche, **wobei** das zumindest eine Datum (ED) ein klimabezogenes Datum, ein parkplatzbezogenes Datum oder ein auf ein besonderes Ereignis im Umfeld des Kraftfahrzeugs (40) bezogenes Datum ist.

6. Verfahren zur Bestimmung einer Messposition für ein Datum (ED), das durch eine Umgebungssensorik (42) eines Kraftfahrzeugs (40) erfasst wurde, wobei das Verfahren in einem Backend (83) implementiert ist, mit den Schritten:
- Empfangen (50) eines Datenpakets (DP) von einem Kraftfahrzeug (40); und
- Extrahieren (52) von Positionsdaten (PD) und lokalen Umfelddaten (UD) mit Angaben zu visuellen Landmarken aus dem Datenpaket (DP);
- Extrahieren (51) zumindest eines Datums (ED) aus dem Datenpaket (DP), für das durch das Backend (83) eine Messposition bestimmt werden soll;
- Verorten (53) des zumindest einen Datums (ED) basierend auf den Positionsdaten (PD) und den lokalen Umfelddaten (UD) mit Angaben zu visuellen Landmarken; und
- Ablegen des verorteten Datums (ED) in einer Datenbank (69);
wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge.

7. Verfahren gemäß Anspruch 6, **wobei** das Verorten (53) des zumindest einen Datums (ED) einen Abgleich der lokalen Umfelddaten (UD) mit Angaben zu visuellen Landmarken mit einer digitalen Karte umfasst.

8. Verfahren gemäß einem der vorherigen Ansprüche, **wobei** die visuellen Landmarken eines oder mehrere der folgenden Elemente umfassen: Spurmarkierungen, Fahrbahnbegrenzungen, Bodenmarkierungen, Verkehrszeichen, Leitpfosten, Schutzplanken, Lichtsignalanlagen und bauliche Objekte.

9. Verfahren gemäß Anspruch 8, **wobei** die Angaben zu Spurmarkierungen eine oder mehrere der folgenden Elemente umfassen: Angaben zum Abstand von einer Spurmarkierung, Angaben zur Existenz einer Spurmarkierung, Angaben zur Farbe einer Spurmarkierung, Angaben zur Art einer Spurmarkierung, Angaben zur Krümmung einer Spurmarkierung und Angaben zu einem Gierwinkel des Kraftfahrzeugs.

10. Computerlesbares Speichermedium mit Instruktionen, die bei Ausführung durch einen Computer den Computer zur Ausführung der Schritte eines Verfahrens gemäß einem der Ansprüche 1 bis 9 zur Bestimmung einer Messposition für ein durch ein Kraftfahrzeug (40) erfassten Datums (ED) veranlassen.

11. Vorrichtung (20) zur Verwendung in einem Kraftfahrzeug (40) zur Bestimmung einer Messposition für ein Datum (ED), das durch eine Umgebungssensorik (42) des Kraftfahrzeugs (40) erfasst wird, mit einer Zusatzdatenbestimmungseinheit (23) zum Bestimmen (11) von Positionsdaten (PD), die von einem Navigationssystem (41) des Kraftfahrzeugs (40) bereitgestellt werden, und zum Bestimmen (11) von lokalen Umfelddaten (UD) mit Angaben zu visuellen Landmarken, die von der Umgebungssensorik (42) bereitgestellt werden; und
- eine Datenerfassungseinheit (22) zum Erfassen (10) zumindest eines Datums (ED), das durch die Umgebungssensorik (42) bereitgestellt wird und für das in einem Backend (83) eine Messposition bestimmt werden soll; und
- eine Datenverarbeitungseinheit (24) zum Generieren (13) eines Datenpakets (DP) durch Verknüpfen des Datums (ED), der Positionsdaten (PD) und der lokalen Umfelddaten (UD) mit Angaben zu visuellen Landmarken, wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge;
wobei die Vorrichtung (20) eingerichtet ist, das Datenpaket (DP) selbsttätig oder als Reaktion auf eine Anforderung an das Backend (83) zu übermitteln (14).

12. Vorrichtung (50) zur Verwendung in einem Backend (83) zur Bestimmung einer Messposition für ein Datum (ED), das durch eine Umgebungssensorik (42) eines Kraftfahrzeugs (40) erfasst wurde, mit:
- einer Empfangseinheit (62) zum Empfangen (50) eines Datenpakets (DP) von einem Kraftfahrzeug (40); und
- einer Datenverarbeitungseinheit (63) zum Extrahieren (51) von Positionsdaten (PD) und lokalen Umfelddaten (UD) mit Angaben zu visuellen Landmarken aus dem Datenpaket (DP);
- die Datenverarbeitungseinheit (63) eingerichtet ist, zumindest ein Datum (ED) aus dem Datenpaket (DP) zu extrahieren (51), für das durch das Backend (83) eine Messposition bestimmt werden soll; und
- die Vorrichtung (50) eine Verortungseinheit (64) zum Verorten (53) des zumindest einen Datums (ED) aufweist, die eingerichtet ist, das zumindest einen Datum (ED) basierend auf den Positionsdaten (PD) und den lokalen Umfelddaten (UD) mit Angaben zu visuellen Landmarken zu verorten (53) und das verortete Datum (ED) in einer Datenbank (69) abzulegen
wobei ein Umfang der Positionsdaten (PD) und der lokalen Umfelddaten (UD) mit Angaben zu visuellen Landmarken in einem Datenpaket (DP) von der Art des zumindest einen erfassten Datums (ED) abhängig ist, wobei das Datenpaket (DP) für ein erfasstes Datum (ED) mit einem hohen Lokalisierungsbedarf eine erste Menge von Positionsdaten (PD) und lokalen Umfelddaten (UD) mit Angaben zu visuellen Landmarken umfasst und für ein erfasstes Datum (ED) mit einem geringen Lokalisierungsbedarf eine zweite Menge von Positionsdaten (PD) und lokalen Umfelddaten (UD) mit Angaben zu visuellen Landmarken umfasst, die geringer ist als die erste Menge.

13. Kraftfahrzeug (40), **dadurch gekennzeichnet, dass** es eine Vorrichtung (20) gemäß Anspruch 11 aufweist oder eingerichtet ist, ein Verfahren gemäß einem der Ansprüche 1 bis 5 zur Bestimmung einer Messposition für ein durch eine Umgebungssensorik (42) des Kraftfahrzeugs (40) erfasstes Datums (ED) auszuführen.

## Claims

1. Method for determining a measurement position for a datum (ED) that is recorded by environmental sensors (42) of a motor vehicle (40), wherein the method is implemented in the motor vehicle (40), comprising the steps of:
- determining (11) position data (PD) by means of a navigation system (41) of the motor vehicle (40); and
- determining (11) local environment data (UD) containing information on visual landmarks by means of environmental sensors (42);
- recording (10), by means of the environmental sensors (42), at least one datum (ED) for which a measurement position is to be determined in a backend (83);
- generating (13) a data packet (DP) by linking the datum (ED), the position data (PD), and the local environment data (UD) containing information on visual landmarks, wherein an extent of the position data (PD) and the local environment data (UD) containing information on visual landmarks in a data packet (DP) depends on the type of the at least one recorded datum (ED), wherein the data packet (DP) comprises, for a recorded datum (ED) having a high localization requirement, a first set of position data (PD) and local environment data (UD) containing information on visual landmarks and, for a recorded datum (ED) having a low localization requirement, comprises a second set of position data (PD) and local environment data (UD) containing information on visual landmarks that is smaller than the first set; and
- transmitting (14) the data packet (DP) to the backend (83) automatically or in response to a request.

2. Method according to claim 1, **wherein** the at least one datum (ED) for which a measurement position is to be determined in the backend (83) is recorded by means of an ultrasonic sensor, a rain sensor, a light sensor or a temperature sensor (10).

3. Method according to claim 1 or 2, **wherein** the local environment data (UD) containing information on visual landmarks are determined by evaluating images from a camera (11).

4. Method according to any of the preceding claims, **wherein** data (ED), position data (PD) and local environment data (UD) containing information on visual landmarks continuously recorded by the environmental sensors (42) of the motor vehicle (40) are combined into data packets (DP) or a data packet (DP) is generated (13) in response to the at least one recorded datum (ED).

5. Method according to any of the preceding claims, **wherein** the at least one datum (ED) is a climate-related datum, a parking place-related datum or a datum relating to a particular event in the environment of the motor vehicle (40).

6. Method for determining a measurement position for a datum (ED) that was recorded by environmental sensors (42) of a motor vehicle (40), wherein the method is implemented in a backend (83), comprising the steps of:
- receiving (50) a data packet (DP) from a motor vehicle (40); and
- extracting (52) position data (PD) and local environment data (UD) containing information on visual landmarks from the data packet (DP);
- extracting (51) at least one datum (ED) from the data packet (DP), for which datum a measurement position is to be determined by the backend (83);
- locating (53) the at least one datum (ED) on the basis of the position data (PD) and the local environment data (UD) containing information on visual landmarks; and
- storing the located datum (ED) in a database (69);
wherein an extent of the position data (PD) and the local environment data (UD) containing information on visual landmarks in a data packet (DP) depends on the type of the at least one recorded datum (ED), wherein the data packet (DP) comprises, for a recorded datum (ED) having a high localization requirement, a first set of position data (PD) and local environment data (UD) containing information on visual landmarks and, for a recorded datum (ED) having a low localization requirement, comprises a second set of position data (PD) and local environment data (UD) containing information on visual landmarks that is smaller than the first set.

7. Method according to claim 6, **wherein** locating (53) the at least one datum (ED) comprises a comparison of the local environment data (UD) containing information on visual landmarks with a digital map.

8. Method according to any of the preceding claims, **wherein** the visual landmarks comprise one or more of the following elements: lane markings, road boundaries, ground markings, traffic signs, guideposts, guardrails, traffic signal systems and structural objects.

9. Method according to claim 8, **wherein** the information on lane markings comprises one or more of the following elements: information on the distance from a lane marking, information on the existence of a lane marking, information on the color of a lane marking, information on the type of lane marking, information on the curvature of a lane marking and information on a yaw angle of the motor vehicle.

10. Computer-readable storage medium comprising instructions that, when executed by a computer, cause the computer to execute the steps of a method according to any of claims 1 to 9 in order to determine a measurement position for a datum (ED) recorded by a motor vehicle (40).

11. Device (20) for use in a motor vehicle (40) in order to determine a measurement position for a datum (ED) recorded by environmental sensors (42) of the motor vehicle (40), comprising an additional data determination unit (23) for determining (11) position data (PD) provided by a navigation system (41) of the motor vehicle (40), and for determining (11) local environment data (UD) containing information on visual landmarks provided by the environmental sensor (42); and
- a data recording unit (22) for recording (10) at least one datum (ED) which is provided by the environmental sensors (42) and for which a measurement position is to be determined in a backend (83); and
- a data processing unit (24) for generating (13) a data packet (DP) by linking the datum (ED), the position data (PD), and the local environment data (UD) containing information on visual landmarks, wherein an extent of the position data (PD) and the local environment data (UD) containing information on visual landmarks in a data packet (DP) depends on the type of the at least one recorded datum (ED), wherein the data packet (DP) comprises, for a recorded datum (ED) having a high localization requirement, a first set of position data (PD) and local environment data (UD) containing information on visual landmarks and, for a recorded datum (ED) having a low localization requirement, comprises a second set of position data (PD) and local environment data (UD) containing information on visual landmarks that is smaller than the first set;
wherein the device (20) is designed to transmit (14) the data packet (DP) to the backend (83) automatically or in response to a request.

12. Device (50) for use in a backend (83) in order to determine a measurement position for a datum (ED) that was recorded by environmental sensors (42) of a motor vehicle (40), comprising:
- a receiving unit (62) for receiving (50) a data packet (DP) from a motor vehicle (40); and
- a data processing unit (63) for extracting (51) position data (PD) and local environment data (UD) containing information on visual landmarks from the data packet (DP);
- the data processing unit (63) being designed to extract at least one datum (ED) from the data packet (DP) (51), for which datum a measurement position is to be determined by the backend (83); and
- the device (50) having a location unit (64) for locating (53) the at least one datum (ED), which unit is designed to locate (53) the at least one datum (ED) on the basis of the position data (PD) and the local environment data (UD) containing information on visual landmarks and to store the located datum (ED) in a database (69),
wherein an extent of the position data (PD) and the local environment data (UD) containing information on visual landmarks in a data packet (DP) depends on the type of the at least one recorded datum (ED), wherein the data packet (DP) comprises, for a recorded datum (ED) having a high localization requirement, a first set of position data (PD) and local environment data (UD) containing information on visual landmarks and, for a recorded datum (ED) having a low localization requirement, comprises a second set of position data (PD) and local environment data (UD) containing information on visual landmarks that is smaller than the first set.

13. Motor vehicle (40), **characterized in that** it has a device (20) according to claim 11 or is designed to execute a method according to any of claims 1 to 5 in order to determine a measurement position for a datum (ED) recorded by environmental sensors (42) of the motor vehicle (40).

## Revendications

1. Procédé de détermination d'une position de mesure pour un repère (ED), qui est détecté par un système de capteurs environnementaux (42) d'un véhicule automobile (40), dans lequel le procédé est mis en œuvre dans le véhicule automobile (40), comportant les étapes suivantes :
- détermination (11) de données de position (PD) par le biais d'un système de navigation (41) du véhicule automobile (40) ; et
- détermination (11) de données d'environnement locales (UD) comportant des indications relatives à des points de référence visuels par le système de capteurs environnementaux (42) ;
- détection (10) par le système de capteurs environnementaux (42) d'au moins un repère (ED) pour lequel une position de mesure doit être déterminée dans un système dorsal (83) ;
- génération (13) d'un paquet de données (DP) par association du repère (ED), des données de position (PD) et des données d'environnement locales (UD) comportant des indications relatives à des points de référence visuels, dans lequel une étendue des données de position (PD) et des données d'environnement locales (UD) comportant des indications relatives à des points de référence visuels dans un paquet de données (DP) dépend de la nature de l'au moins un repère (ED) détecté, dans lequel le paquet de données (DP) pour un repère (ED) détecté comportant un besoin élevé de localisation comprend une première quantité de données de position (PD) et de données d'environnement locales (UD) comportant des indications relatives à des points de référence visuels, et, pour un repère (ED) détecté comportant un faible besoin de localisation, une seconde quantité de données de position (PD) et de données d'environnement locales (UD) comportant des indications relatives à des points de référence visuels, qui est inférieure à la première quantité ; et
- de manière automatique ou en réaction à une requête, transmission (14) du paquet de données (DP) vers le système dorsal (83).

2. Procédé selon la revendication 1, **dans lequel** l'au moins un repère (ED) pour lequel une position de mesure doit être déterminée dans le système dorsal (83) est détecté (10) par le biais d'un capteur à ultrasons, d'un capteur de pluie, d'un capteur de lumière ou d'un capteur de température.

3. Procédé selon la revendication 1 ou 2, **dans lequel** les données d'environnement locales (UD) comportant des indications relatives à des points de référence visuels sont déterminées (11) par évaluation d'images d'une caméra.

4. Procédé selon l'une des revendications précédentes, **dans lequel** les repères (ED) détectés en continu par le système de capteurs environnementaux (42) du véhicule automobile (40), les données de position (PD) et les données d'environnement locales (UD) comportant des indications relatives à des points de référence visuels sont associés à des paquets de données (DP), ou un paquet de données (DP) est généré (13) en réaction à l'au moins un repère (ED) détecté.

5. Procédé selon l'une des revendications précédentes, **dans lequel** l'au moins un repère (ED) est un repère lié au climat, un repère lié à une place de stationnement ou un repère lié à un événement particulier dans l'environnement du véhicule automobile (40).

6. Procédé de détermination d'une position de mesure pour un repère (ED) qui a été détecté par un système de capteurs environnementaux (42) d'un véhicule automobile (40), dans lequel le procédé est mis en œuvre dans un système dorsal (83), comportant les étapes suivantes :
- réception (50) d'un paquet de données (DP) provenant d'un véhicule automobile (40) ; et
- extraction (52) du paquet de données (DP) de données de position (PD) et de données d'environnement locales (UD) comportant des indications relatives à des points de référence visuels ;
- extraction (51) d'au moins un repère (ED) du paquet de données (DP) pour lequel le système dorsal (83) doit déterminer une position de mesure ;
- positionnement (53) de l'au moins un repère (ED) en se basant sur les données de position (PD) et les données d'environnement locales (UD) comportant des indications relatives à des points de référence visuels ; et
- enregistrement du repère (ED) positionné dans une base de données (69) ;
dans lequel une étendue des données de position (PD) et des données d'environnement locales (UD) comportant des indications relatives à des points de référence visuels dans un paquet de données (DP) dépend de la nature de l'au moins un repère (ED) détecté, dans lequel le paquet de données (DP) pour un repère (ED) détecté comportant un besoin élevé de localisation comprend une première quantité de données de position (PD) et de données d'environnement locales (UD) comportant des indications relatives à des points de référence visuels, et, pour un repère (ED) détecté comportant un faible besoin de localisation, une seconde quantité de données de position (PD) et de données d'environnement locales (UD) comportant des indications relatives à des points de référence visuels, qui est inférieure à la première quantité.

7. Procédé selon la revendication 6, **dans lequel** le positionnement (53) de l'au moins un repère (ED) comprend une mise en correspondance des données d'environnement locales (UD) avec des indications relatives à des points de référence visuels avec une carte numérique.

8. Procédé selon l'une des revendications précédentes, **dans lequel** les points de référence visuels comprennent un ou plusieurs des éléments suivants : marquages de voies de circulation, délimitations de chaussée, marquages au sol, signalisation routière, poteaux de guidage, glissières de sécurité, feux de signalisation et ouvrages bâtis.

9. Procédé selon la revendication 8, **dans lequel** les indications relatives aux marquages de voies de circulation comprennent un ou plusieurs des éléments suivants : indications relatives à la distance par rapport à un marquage de voies de circulation, indications relatives à la présence d'un marquage de voies de circulation, indications relatives à la couleur d'un marquage de voies de circulation, indications relatives à la nature d'un marquage de voies de circulation, indications relatives à la courbure d'un marquage de voies de circulation et indications relatives à l'angle de braquage du véhicule automobile.

10. Support de stockage lisible par ordinateur comportant des instructions, lesquelles, lors de leur exécution par un ordinateur, amènent l'ordinateur à exécuter les étapes d'un procédé selon l'une des revendications 1 à 9 pour la détermination d'une position de mesure pour un repère (ED) détecté par un véhicule automobile (40).

11. Dispositif (20) destiné à être utilisé dans un véhicule automobile (40) pour déterminer une position de mesure pour un repère (ED) qui est détecté par un système de capteurs environnementaux (42) du véhicule automobile (40), comportant une unité de détermination de données supplémentaires (23) destinée à déterminer (11) des données de position (PD) qui sont fournies par un système de navigation (41) du véhicule automobile (40) et pour déterminer (11) des données d'environnement locales (UD) comportant des indications sur des points de référence visuels, qui sont fournies par le système de capteurs environnementaux (42) ; et
- une unité de détection de données (22) destinée à détecter (10) au moins un repère (ED) qui est fourni par le système de capteurs environnementaux (42) et pour lequel une position de mesure doit être déterminée dans un système dorsal (83) ; et
- une unité de traitement de données (24) destinée à générer (13) un paquet de données (DP) par association du repère (ED), des données de position (PD) et des données d'environnement locales (UD) comportant des indications relatives à des points de référence visuels, dans lequel une étendue des données de position (PD) et des données d'environnement locales (UD) comportant des indications relatives à des points de référence visuels dans un paquet de données (DP) dépend de la nature de l'au moins un repère (ED) détecté, dans lequel le paquet de données (DP) pour un repère (ED) détecté comportant un besoin élevé de localisation comprend une première quantité de données de position (PD) et de données d'environnement locales (UD) comportant des indications relatives à des points de référence visuels, et, pour un repère (ED) détecté comportant un faible besoin de localisation, une seconde quantité de données de position (PD) et de données d'environnement locales (UD) comportant des indications relatives à des points de référence visuels, qui est inférieure à la première quantité ;
dans lequel le dispositif (20) est conçu pour transmettre (14) le paquet de données (DP) de manière automatique ou en réaction à une requête au système dorsal (83).

12. Dispositif (50) destiné à être utilisé dans un système dorsal (83) pour déterminer une position de mesure pour un repère (ED) qui a été détecté par un système de capteurs environnementaux (42) d'un véhicule automobile (40), comportant :
- une unité de réception (62) destinée à recevoir (50) un paquet de données (DP) provenant d'un véhicule automobile (40) ; et
- une unité de traitement de données (63) destinée à extraire (51) du paquet de données (DP) des données de position (PD) et des données d'environnement locales (UD) comportant des indications relatives à des points de référence visuels ;
- l'unité de traitement des données (63) est conçue pour extraire (51) au moins un repère (ED) du paquet de données (DP) pour lequel le système dorsal (83) doit déterminer une position de mesure ; et
- le dispositif (50) présente une unité de positionnement (64) destinée à positionner (53) l'au moins un repère (ED), qui est conçue pour positionner (53) l'au moins un repère (ED) sur la base des données de position (PD) et des données d'environnement locales (UD) comportant des indications relatives à des points de référence visuels, et à enregistrer le repère (ED) positionné dans une base de données (69)
dans lequel une étendue des données de position (PD) et des données d'environnement locales (UD) comportant des indications relatives à des points de référence visuels dans un paquet de données (DP) dépend de la nature de l'au moins un repère (ED) détecté, dans lequel le paquet de données (DP) pour un repère (ED) détecté comportant un besoin élevé de localisation comprend une première quantité de données de position (PD) et de données d'environnement locales (UD) comportant des indications relatives à des points de référence visuels, et, pour un repère (ED) détecté comportant un faible besoin de localisation, une seconde quantité de données de position (PD) et de données d'environnement locales (UD) comportant des indications relatives à des points de référence visuels, qui est inférieure à la première quantité.

13. Véhicule automobile (40), **caractérisé en ce qu'**il présente un dispositif (20) selon la revendication 11 ou est conçu pour exécuter un procédé selon l'une des revendications 1 à 5 pour la détermination d'une position de mesure pour un repère (ED) détecté par un système de capteurs environnementaux (42) du véhicule automobile (40).
